# EUROPÄISCHE PATENTSCHRIFT

(11) **EP 2 916 437 B1**
(45) Veröffentlichungstag und Bekanntmachung des Hinweises auf die Patenterteilung: **08.01.2020**
(21) Anmeldenummer: 14157665.2
(22) Anmeldetag: 04.03.2014
(51) Int. Cl.: H02K 3/52

(54) **Statoranordnung eines Elektromotors**
Stator assembly for an electric motor
Agencement de stator de moteur électrique

(43) Veröffentlichungstag der Anmeldung: 09.09.2015
(73) Patentinhaber: Grundfos Holding A/S, 8850 Bjerringbro (DK)
(72) Erfinder: Hellegaard, Kjeld, 8850 Bjerringbro (DK); Nielsen, Henrik Skytte, 8600 Silkeborg (DK)
(74) Vertreter: Patentanwälte Vollmann Hemmer Lindfeld Partnerschaft mbB

(56) Entgegenhaltungen:
- WO-A2-2013/174523
- US-A1- 2010 264 773
- US-A1- 2013 154 427

## Beschreibung

Die Erfindung betrifft eine Statoranordnung eines Elektromotors.

Bei Elektromotoren, wie sie beispielsweise zum Antrieb von Pumpenaggregaten verwendet werden, weisen die Statoren in der Regel ein Blechpaket auf, auf welchem mehrere elektrische Spulen ggf. auf Wicklungsträgern angeordnet sind. Diese elektrischen Spulen sind in der Regel an einem Axialende des Stators elektrisch miteinander verschaltet bzw. verbunden, wozu Verbindungsdrähte zwischen den einzelnen Spulen am Axialende verlaufen. Diese Verbindungsdrähte müssen so angeordnet werden, dass der Innenraum des Stators, in welchem der Rotor rotiert, frei bleibt. Dazu müssen die Verbindungsdrähte in geeigneter Weise fixiert werden.

US 2013/0154427 A1 offenbart einen Stator einer elektrischen Maschine. Der Stator weist eine Vielzahl von Polen auf, welche jeweils mit einem Wicklungsträger versehen sind, auf welchen eine Wicklung gewickelt ist. An einem Axialende ist auf den Wicklungsträger ein Kunststoffelement aufgesetzt, welches auf seiner der Wicklung abgewandten Außenseite Schlitze und Ausnehmungen aufweist, in welche Anschlussdrähte der Wicklungen geführt werden können. Die Montage dieses Elementes ist recht aufwendig, da es nach dem Aufbringen der Wicklungen auf den Wicklungsträger aufgesetzt werden muss und im Anschluss die Anschlussdrähte der Wicklungen in die beschriebenen Schlitze des Elementes eingebracht werden müssen.

US 2010/0264773 A1 offenbart einen Stator eines Elektromotors, welcher eine Vielzahl von Statorpolen aufweist, um welche jeweils eine Wicklung auf einem Wicklungsträger gewickelt ist. Nach dem Aufbringen der Wicklung ist auf den Wicklungsträger in eine die Wicklung aufnehmende Nut ein Block eingesetzt, welcher eine Führungsnut aufweist, durch welche ein Wicklungsdraht in einen zu der Wicklung parallelen Wicklungsbereich geführt werden kann, um dort eine zweite Wicklung aufzubringen. Auch hier ist die Montage aufwendig, da zwischen dem Aufbringen der ersten und der zweiten Wicklung der beschriebene Block in die Nut eingesetzt werden muss. Darüber hinaus bietet der Block keinerlei Führungen für Wicklungsdrähte, welche in Umfangsrichtung um den Stator geführt werden, um einzelne Wicklungen miteinander zu verbinden.

WO 2013/174523 A3 offenbart ein Statorsystem für einen Elektromotor, bei welchem Trennstege zwischen den radial inneren und radial äußeren Wandungen eines Wicklungsträgers angeordnet sind, um die im Wicklungsträger geführten elektrischen Anschlussleitungen zu übergreifen. Diese Trennstege können an einem Ende über ein Filmscharnier mit dem Wicklungsträger verbunden sein und am anderen Ende rastend mit dem Wicklungsträger in Eingriff treten.

Es ist Aufgabe der Erfindung, eine Statoranordnung für einen Elektromotor bereitzustellen, bei welcher Verbindungsdrähte zwischen einzelnen, in Umfangsrichtung des Stators versetzten Spulen auf einfache Weise an dem Stator fixiert werden können.

Diese Aufgabe wird durch eine Statoranordnung mit den in Anspruch 1 angegebenen Merkmalen gelöst. Bevorzugte Ausführungsformen ergeben sich aus den Unteransprüchen, der Beschreibung sowie den Figuren.

Die erfindungsgemäße Statoranordnung ist für einen Elektromotor vorgesehen und weist mehrere Wicklungsträger auf, auf welchen elektrische Wicklungen angeordnet sind. Die Wicklungsträger können dabei bevorzugt Blechelemente bzw. Blechpakte, welche die Joche des Stators bilden, umgeben und dienen der Fixierung der Wicklungen und insbesondere auch ggf. der elektrischen Isolation zwischen Wicklungen und Blechpaket. Die elektrischen Anschlussleitungen der Wicklungen sind an einem ersten Axialende der Statoranordnung in Richtung der Längsachse der Statoranordnung, welche der Drehachse des Elektromotors entspricht, gesehen angeordnet. Erfindungsgemäß ist vorgesehen, dass die Anschlussleitungen der Wicklungen über Befestigungselemente fixiert sind, wobei diese Befestigungselemente jeweils mit einem Wicklungsträger in Eingriff sind. Dabei kann es sich um einen kraft- und/oder formschlüssigen Eingriff handeln. Die Befestigungselemente stellen somit jeweils ein definiert mit dem Wicklungsträger in Eingriff bringbares Bauteil dar, welches der definierten Fixierung der Anschlussleitungen dient. So können die Anschlussleitungen auf einfache Weise mit Hilfe solcher Befestigungselemente in definierter Lage an dem Wicklungsträger fixiert werden, ohne dass aufwendige Befestigungen, wie beispielsweise mit Hilfe von Kabelbindern oder Klebeband erforderlich sind.

Die Anschlussleitungen umfassen vorzugsweise Verbindungsleitungen, welche einzelne Wicklungen elektrisch miteinander verbinden. So können die Wicklungen beispielsweise als Wicklungspaare oder -gruppen angeordnet sein, bei welchen voneinander entfernt liegende Spulen bzw. Wicklungen in Reihe geschaltet sind. Hierzu sind die Spulen an einem Axialende über eine Verbindungsleitung oder mehrere Verbindungsleitungen miteinander verbunden, welche in der beschriebenen Weise mit Hilfe von Befestigungselementen an einem Wicklungsträger befestigt sein können. Dabei ist zu verstehen, dass für jede Anschlussleitung bzw. Verbindungsleitung ein einzelnes Befestigungselement vorgesehen sein kann. Es ist jedoch auch möglich, dass mehrere Anschlussleitungen und/oder Verbindungsleitungen mit gemeinsamen Befestigungselementen an einem Wicklungsträger befestigt sind. Neben den beschriebenen Verbindungsleitungen kann es sich bei den Anschlussleitungen auch um Anschlussleitungen handeln, welche dem elektrischen Anschluss der gesamten Spulenanordnung des Stators, d. h. der Energiezufuhr zu dem Stator dienen und zur elektrischen Verbindung beispielsweise mit elektronischen Bauteilen in einem Elektronikgehäuse oder Klemmenkasten vorgesehen sind.

Erfindungsgemäß sind mehrere Befestigungselemente vorhanden, wobei jeweils ein Befestigungselement mit einem Wicklungsträger in Eingriff ist. Vorzugsweise ist jede Spule bzw. Wicklung auf einem Wicklungsträger angeordnet. Entsprechend ist bevorzugt an jedem Wicklungsträger oder ggf. auch nur an einigen Wicklungsträgern ein Befestigungselement angeordnet. Je nach Größe der Wicklungsträger und der Anordnung der Anschlussleitungen ist es jedoch auch möglich, dass mehrere Befestigungselemente mit einem Wicklungsträger in Eingriff sind.

Besonders bevorzugt ist an jedem der Wicklungsträger jeweils ein Befestigungselement angeordnet, welches mit diesem Wicklungsträger in Eingriff ist. So ist jedem Wicklungsträger genau ein Befestigungselement zugeordnet. So können Anschlussleitungen bzw. Verbindungsleitungen über den gesamten Umfang der Statoranordnung sicher fixiert werden.

Die Befestigungselemente sind über zumindest eine Rastverbindung mit den Wicklungsträgern in Eingriff. Dies ermöglicht eine sehr einfache Befestigung, da die Fixierung durch Verrasten erfolgen kann und die Verbindung bzw. der Eingriff bevorzugt so ausgebildet ist, dass der Eingriff ohne spezielle Werkzeuge hergestellt werden kann.

Vorzugsweise sind die Befestigungselemente und die Wicklungsträger aus Kunststoff ausgebildet. Dies ermöglicht zum einen eine kostengünstige Fertigung. Zum anderen können die Befestigungselemente und die Wicklungsträger auf einfache Weise so ausgebildet werden, dass sie einen Eingriff miteinander ermöglichen, insbesondere durch Verklemmen oder Verrasten. Sie können dazu korrespondierende Eingriffsabschnitte bzw. Eingriffselemente aufweisen, welche miteinander in Eingriff treten. Kunststoff hat ferner den Vorteil, dass er elektrisch isolierend ist.

Weiter bevorzugt sind die Befestigungselemente steif ausgebildet. D. h. die Befestigungselemente sind eigenstabil bzw. formstabil ausgebildet, sodass sie ohne externe Krafteinwirkung eine definierte feste Form aufweisen. Somit unterscheiden sich die erfindungsgemäßen Befestigungselemente vorzugsweise von Befestigungselementen, welche aus einem Elastomer, beispielsweise in Form eines Gummis gefertigt sind. Die steife Ausbildung kann jedoch eine derartige elastische Verformung zulassen, welche ein Eingreifen in eine Klemm- oder Rastverbindung ermöglicht. D. h. die Elastizität ist vorzugsweise so, dass die Befestigungselemente ohne Krafteinwirkung selbsttätig in eine eigenstabile Form zurückkehren.

Die Befestigungselemente sind so angeordnet, dass sie sich in radialer Richtung bezogen auf die Längsachse der Statoranordnung erstrecken. So erstrecken sie sich insbesondere quer zu den zu fixierenden Anschluss- oder Verbindungsleitungen, welche im Wesentlichen in Umfangsrichtung an der Stirnseite der Statoranordnung angeordnet werden. So übergreifen die Befestigungselemente die zu fixierenden Anschlussleitungen. Die Wicklungsträger weisen vorzugsweise radial innen und radial außen liegende Wandabschnitte auf, zwischen denen die Wicklungen bzw. Spulen gewickelt sind. Die Befestigungselemente verbinden vorzugsweise diese radial äußeren und inneren Wandabschnitte miteinander, sodass auch die Verbindungsleitungen bzw. Anschlussleitungen an der Axialseite zwischen diesen Wandabschnitten geführt werden. Die Wandabschnitte erstrecken sich dazu in axialer Richtung vorzugsweise über die zwischen ihnen angeordnete Wicklung hinaus.

Die Befestigungselemente sind jeweils über ein Gelenk schwenkbar mit einem Wicklungsträger verbunden, wobei das Gelenk an einem radial äußeren Ende des Befestigungselementes gelegen ist. Ein solches Gelenk ermöglicht es, ein Befestigungselement an dem Wicklungsträger zu fixieren und zwischen einer geöffneten und einer geschlossenen Position zu verschwenken. So kann das Befestigungselement an dem Wicklungsträger vor dem Einlegen der Anschluss- oder Verbindungsleitung bereits angebracht sein, sodass es verliersicher befestigt ist. Nach Einlegen der zu fixierenden Anschlussleitung oder Anschlussleitungen kann es dann in seine geschlossene Position in dem Gelenk verschwenkt werden.

Das Gelenk liegt jeweils am radial äußeren Ende der Befestigungselemente, so dass die Befestigungselemente vorzugsweise nach radial außen aufgeklappt werden und zum Fixieren der Anschlussleitung bzw. Anschlussleitungen nach deren Einlegen radial nach innen verschwenkt und dann mit seinem radial innen liegenden Ende an der anderen Seite, d. h. der radialen Innenseite des Wicklungsträgers befestigt werden.

Gemäß einer besonderen Ausführungsform weisen die Befestigungselemente eine symmetrische Gestalt auf, wobei sie weiter bevorzugt spiegelsymmetrisch zu einer Mittelachse ausgebildet sind. Im montierten Zustand der Befestigungselemente erstreckt sich diese Symmetrie- bzw. Mittelachse vorzugsweise normal zum Radius der Statoranordnung, d. h. im Wesentlichen in sehnenförmig bzw. tangential zu dieser. Die symmetrische Ausgestaltung der Befestigungselemente hat den Vorteil, dass sie in beliebiger Ausrichtung an dem Wicklungsträger befestigt werden können, d. h. es muss nicht darauf geachtet werden, welches Längsende des Befestigungselementes radial innen und welches Längsende radial außen liegt. So wird die Montage vereinfacht.

An dem zumindest einen Wicklungsträger ist zumindest ein erstes Eingriffselement ausgebildet, in welches ein Befestigungselement rastend eingreift. Das Eingriffselement ist somit als eine Rastaufnahme ausgebildet. Gleichzeitig ist dieses Eingriffselement als Gelenkaufnahme ausgebildet, in welche das Befestigungselement zur Ausbildung eines Gelenkes einrastet, sodass es nach dem Einrasten in dem Gelenk in der oben beschriebenen Weise verschwenkbar ist. Das Befestigungselement weist bevorzugt ein korrespondierendes Eingriffselement auf, welches mit dem ersten Eingriffselement an dem Wicklungsträger rastend in Eingriff treten kann. Die Verbindung kann dabei lösbar oder auch unlösbar sein, wobei unlösbar bedeutet, dass die Verbindung zumindest ohne Werkzeug nicht zerstörungsfrei gelöst werden kann.

Besonders bevorzugt weist der Wicklungsträger an seiner radial äußeren Seite ein erstes Eingriffselement und an seiner radial inneren Seite ein zweites Eingriffselement auf, mit welchem das Befestigungselement in Eingriff ist bzw. in Eingriff treten kann. Dabei können gemäß einer besonderen Ausführungsform das erste und das zweite Eingriffselement identisch ausgebildet sein, sodass bei symmetrischer Ausgestaltung des Befestigungselementes, wie sie oben beschrieben wurde, das Befestigungselement in beliebiger radialer Richtung in die Eingriffselement eingesetzt bzw. mit diesen in Eingriff gebracht werden kann. Die Eingriffselemente sind wie beschrieben bevorzugt als Rastelemente ausgebildet und gleichzeitig kann zumindest eines der Eingriffselemente als Gelenkaufnahmen ausgebildet sein, um einen gelenkigen Eingriff des Befestigungselementes zu ermöglichen, sodass das Befestigungselement, wenn es von einem der Eingriffselemente an dem Wicklungsträger außer Eingriff gebracht wird in dem anderen Eingriffselement am radial entgegengesetzten Ende verschwenkt werden kann. Dabei erstreckt sich die Schwenkachse bevorzugt in tangentialer Richtung, d. h. normal zum Radius und normal zur Längsachse der Statoranordnung.

Wie beschrieben können die Befestigungselemente mit zumindest einem Eingriffselement an einem Wicklungsträger vorzugsweise lösbar in Eingriff sein. Dies kann eine lösbare kraft- und/oder formschlüssige Verbindung, insbesondere eine lösbare Rastverbindung sein. Die lösbare Ausgestaltung hat den Vorteil, dass die Befestigung durch die Befestigungselemente geöffnet werden kann, beispielsweise zu Reparaturzwecken.

Gemäß einer besonderen Ausführungsform der Erfindung weist der zumindest eine Wicklungsträger einen axialen Endabschnitt auf, mit welchem das zumindest eine Befestigungselement in Eingriff ist, insbesondere in einer der oben erläuterten Weisen in Eingriff ist. Dieser axiale Endabschnitt kann ein separates Bauteil sein, welches ggf. mit weiteren Abschnitten des Wicklungsträgers verbunden, insbesondere kraft- und/oder formschlüssig verbunden, beispielsweise verrastet ist. So kann der Wicklungsträger gemäß einer bevorzugten Ausgestaltung mehrteilig ausgebildet sein, insbesondere um über einem Abschnitt eines Blechpaketes, welches sich durch das Innere des Wicklungsträgers erstreckt, angeordnet zu werden. So kann der Wicklungsträger beispielsweise aus zwei u-förmigen Abschnitten gebildet sein, welche von zwei Axialenden her auf das Blechpaket aufgesteckt und miteinander verbunden werden. Nach dem Aufsetzen des Wicklungsträgers kann dann die Wicklung aufgebracht werden. Alternativ ist es auch möglich, den Wicklungsträger so auszubilden, dass die Wicklung vor dem Aufbringen des Wicklungsträgers auf ein Statorblechpaket gewickelt wird. Ferner können auch mehrere umfänglich benachbarte Wicklungsträger miteinander verbunden oder einstückig ausgebildet sein.

Die beschriebene Statoranordnung ist weiter bevorzugt Teil eines elektrischen Motors, insbesondere eines elektrischen Antriebsmotors eines Pumpenaggregates, beispielsweise eines Kreiselpumpenaggregates. Dabei kann der elektrische Motor als Spaltrohrmotor ausgebildet sein. Entsprechend ist Gegenstand der Erfindung neben der Statoranordnung auch ein elektrischer Motor mit einer solchen Statoranordnung und ein Pumpenaggregat mit einem solchen elektrischen Motor mit einer Statoranordnung, wie sie vorangehend beschrieben wurde. Vorzugsweise handelt es sich bei diesem Pumpenaggregat um ein nasslaufendes Umwälzpumpen- bzw. Kreiselpumpenaggregat, d. h. ein Pumpenaggregat mit einem als Spaltrohrmotor ausgebildeten elektrischen Motor.

Nachfolgend wird die Erfindung beispielhaft anhand der beigefügten Figuren beschrieben. In diesen zeigt:
- Fig. 1: eine perspektivische Ansicht einer erfindungsgemäßen Statoranordnung,
- Fig. 2: den axialen Endabschnitt eines Wicklungsträgers mit gelöstem Befestigungselement,
- Fig. 3: den Endabschnitt des Wicklungsträgers gemäß Fig. 2 mit einseitig befestigtem Befestigungselement,
- Fig. 4 und 5: das Verschwenken des Befestigungselementes gemäß Fig. 3 und
- Fig. 6: den axialen Endabschnitt des Wicklungsträgers gemäß Fig. 2 - 5 mit beidseitig verrastetem Befestigungselement.

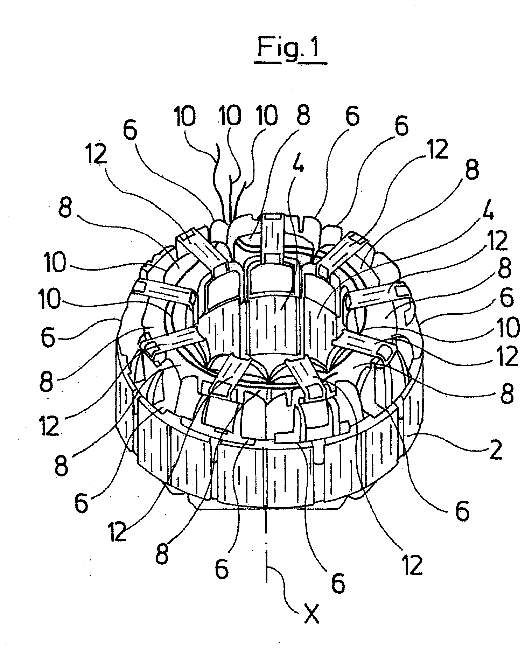

Die erfindungsgemäße Statoranordnung weist in bekannter Weise ein Blechpaket 2 auf, welches eine ringförmige Struktur mit radial nach innen gerichteten Vorsprüngen 4 hat, wobei in diesem Ausführungsbeispiel neun Vorsprünge 4 vorgesehen sind. Auf den Vorsprüngen 4 sind Wicklungsträger 6 am Axialende des Blechpaketes 2 aufgesetzt, wobei in diesem Beispiel nur die Wicklungsträger bzw. deren Endabschnitte an einem Axialende gezeigt sind. Es ist zu verstehen, dass entsprechende Wicklungsträger 6 bzw. Abschnitte solcher Wicklungsträger 6 vom entgegengesetzten Axialende her aufgesetzt sein können. Um jeden der Wicklungsträger 6 ist jeweils eine Spule bzw. Wicklung 8 gewickelt. An dem gezeigten Axialende der Statoranordnung sind die Wicklungen 8 über Verbindungs- bzw. Anschlussleitungen 10 elektrisch kontaktiert bzw. miteinander verbunden. Von den Anschlussleitungen 10 sind in Fig. 1 nur einige schematisch gezeigt. Die Anschlussleitungen 10 dienen dem elektrischen Anschluss der Wicklungen 8 und auch der Verbindung untereinander, da stets mehrere Wicklungen 8 in Reihe geschaltet sein können. So können im gezeigten Beispiel für einen dreiphasigen Motor stets drei um jeweils 120° versetzt zueinander angeordnete Wicklungen 8 miteinander in Reihe geschaltet sein.

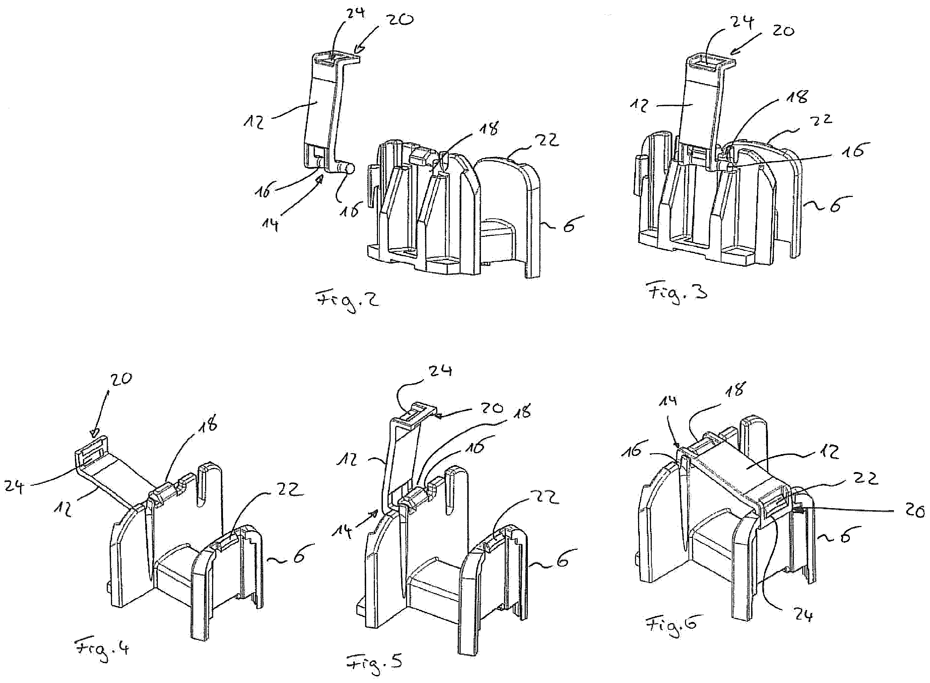

Die Anschlussleitungen 10 sind an den Wicklungsträgern 6, von welchen in Fig. 1 nur axiale Endabschnitte gezeigt sind und welche im Detail in Fig. 2 - 6 dargestellt sind, mit Hilfe von Befestigungselementen 12 fixiert. Diese Fixierung wird anhand der Fig. 2 - 6 näher beschrieben, wobei in den Fig. 2 - 6 nur ein Wicklungsträger 6 bzw. dessen axialer Endabschnitt mit dem zugehörigen Befestigungselement 12 gezeigt ist. Die Wicklungen 8 sowie die Anschlussleitungen 10 sind in den Fig. 2 -6 nicht gezeigt. In dem gezeigten Beispiel ist an jedem der Wicklungsträger 6 ein Befestigungselement 12 angeordnet. Die Befestigungselemente 12 erstrecken sich dabei in radialer Richtung bezogen auf die Längsachse X der Statoranordnung, welche der Drehachse eines in der Statoranordnung aufzunehmenden Rotors entspricht. Die Befestigungselemente 12 weisen im gezeigten Beispiel an einem ersten Radialende 14 ein erstes Eingriffselement in Form von Gelenkbolzen 16 auf. Das Radialende 14 ist im gezeigten Beispiel das radial äußere Ende. Die Gelenkbolzen 16 sind rastend mit einem ersten Eingriffselement in Form einer Gelenkaufnahme 18 an der radial äußeren Seite bzw. einem radial äußeren Wandabschnitt des Wicklungsträgers 5 rastend in Eingriff bringbar. Im so eingerasteten Zustand, welcher in den Fig. 3 - 6 gezeigt ist, ist das Befestigungselement 12 um die Gelenkbolzen 16 in der Gelenkaufnahme 18 verschwenkbar.

In der in Fig. 3 - 5 gezeigten geöffneten Position kann eine Anschlussleitung 10 in den Wicklungsträger 6 in den später von dem Befestigungselement 12 zu überdeckenden Bereich eingelegt werden. Anschließend kann das Befestigungselement 12 in seine geschlossene Position verschwenkt werden, in welcher das zweite innere Radialende 20 mit der radial inneren Seite bzw. einen radial inneren Wandabschnitt des Wicklungsträgers 6 rastend in Eingriff kommt. Dazu ist an der radial inneren Seite des Wicklungsträgers 6 am Axialende ein Rastvorsprung 22 ausgebildet, welcher ein zweites Eingriffselement bildet. Das zweite Radialende 20 des Befestigungselementes 12 ist mit einem korrespondierenden Eingriffselement in Form einer Rastausnehmung 24 ausgebildet, in welche der Rastvorsprung 22 des Wicklungsträgers 2 eintreten kann, sodass das Befestigungselement 12, wie in Fig. 6 gezeigt an seinen beiden Radialenden 14 und 20 an der axialen Stirnseite des Wicklungsträgers 6 fixiert ist. Dabei wird an dem radial äußeren Wandabschnitt des Wicklungsträgers 6 eine Verbindung über den Gelenkbolzen 16 und die Gelenkaufnahme 18 und am radial innenliegenden Wandabschnitt des Wicklungsträgers 6 eine Verbindung über den Rastvorsprung 22 und die Rastausnehmung 24 hergestellt.

Der Wicklungsträger 6 und das Befestigungselement 12 sind aus Kunststoff ausgebildet und weisen eine derartige Elastizität auf, dass die Gelenkbolzen 16 unter Verformung rastend in die Gelenkaufnahme 18 und die Rastausnehmung 24 unter Verformung rastend über den Rastvorsprung 22 bewegt werden können. Gleichzeitig ist das Befestigungselement 12 jedoch vorzugsweise eigenstabil ausgebildet, sodass es ohne Krafteinwirkung stabil seine Form beibehält. So wird eine definierte Form der Statoranordnung bei geschlossenem Befestigungselement 12 sichergestellt, welcher einen problemlosen Einbau der Statoranordnung in ein Statorgehäuse ermöglicht.

### Bezugszeichenliste

- 2: - Blechpaket
- 4: - Vorsprünge
- 6: - Wicklungsträger
- 8: - Wicklungen
- 10: - Anschlussleitungen
- 12: - Befestigungselemente
- 14: - erstes Radialende
- 16: - Gelenkbolzen
- 18: - Gelenkaufnahme
- 20: - zweites Radialende
- 22: - Rastvorsprung
- 24: - Rastausnehmung

- X: - Längsachse

## Patentansprüche

1. Statoranordnung eines Elektromotors mit mehreren Wicklungsträgern (6), auf welchen elektrische Wicklungen (8) angeordnet sind, wobei
elektrische Anschlussleitungen (10) der Wicklungen an einem ersten Axialende der Statoranordnung angeordnet sind,
die Anschlussleitungen (10) über mehrere Befestigungselemente (12), welche jeweils mit einem Wicklungsträger (6) in Eingriff sind, fixiert sind, und
die Befestigungselemente (12) sich in radialer Richtung bezogen auf die Längsachse (X) der Statoranordnung erstrecken und die zu fixierenden Anschlussleitungen (10), welche in Umfangsrichtung an einer Stirnseite der Statoranordnung angeordnet sind, übergreifen,
**dadurch gekennzeichnet, dass**
die Befestigungselemente (12) jeweils an ihrem radial äußeren Ende über ein Gelenk (16, 18) schwenkbar mit dem Wicklungsträger (6) verbunden sind, wobei an dem Wicklungsträger (6) zumindest ein erstes als Gelenkaufnahme ausgebildetes Eingriffselement (18) ausgebildet ist, in welches das Befestigungselement (12) zur Ausbildung des Gelenkes (16, 18) rastend eingreift, so dass es nach dem Einrasten in dem Gelenk zwischen einer geöffneten und einer geschlossenen Position verschwenkbar ist

2. Statoranordnung nach Anspruch 1, **dadurch gekennzeichnet, dass** die Anschlussleitungen (10) Verbindungsleitungen umfassen, welche einzelne Wicklungen (8) elektrisch miteinander verbinden.

3. Statoranordnung nach einem der vorangehenden Ansprüche, **dadurch gekennzeichnet, dass** an jedem der Wicklungsträger (6) jeweils ein Befestigungselement (12) angeordnet ist, welches mit diesem Wicklungsträger in Eingriff ist.

4. Statoranordnung nach einem der vorangehenden Ansprüche, **dadurch gekennzeichnet, dass** die Befestigungselemente (12) und die Wicklungsträger (6) aus Kunststoff ausgebildet sind.

5. Statoranordnung nach einem der vorangehenden Ansprüche, **dadurch gekennzeichnet, dass** das zumindest eine Befestigungselement (12) steif ausgebildet ist.

6. Statoranordnung nach einem der vorangehenden Ansprüche, **dadurch gekennzeichnet, dass** die Befestigungselemente (12) eine symmetrische Gestalt aufweisen.

7. Statoranordnung nach einem der vorangehenden Ansprüche, **dadurch gekennzeichnet, dass** zumindest einer der Wicklungsträger (6) an seiner radial inneren Seite ein zweites Eingriffselement (22) aufweist, mit welchen das Befestigungselement (12) in Eingriff ist.

8. Statoranordnung nach einem der vorangehenden Ansprüche, **dadurch gekennzeichnet, dass** das Befestigungselement (12) mit zumindest einem Eingriffselement (16, 24) an dem Wicklungsträger (6) lösbar in Eingriff ist.

9. Statoranordnung nach einem der vorangehenden Ansprüche, **dadurch gekennzeichnet, dass** der Wicklungsträger (6) einen axialen Endabschnitt aufweist, mit welchem das zumindest eine Befestigungselement (12) in Eingriff ist.

10. Statoranordnung nach einem der vorangehenden Ansprüche, **dadurch gekennzeichnet, dass** sie Teil eines elektrischen Motors, insbesondere eines elektrischen Antriebsmotors eines Pumpenaggregates ist.

## Claims

1. A stator arrangement of an electric motor with several winding carriers (6), on which electrical windings (8) are arranged, wherein electrical terminal leads (10) of the windings are arranged at a first axial end of the stator arrangement,
the terminal leads (10) are fixed via several fastening elements (12) which are each engaged with a winding carrier (6), and
the fastening elements (12) extend in the radial direction with respect to the longitudinal axis (X) of the stator arrangement and engage over the terminal leads (10) which are to be fixed and which are arranged on a face side of the stator arrangement in the peripheral direction,
**characterised in that** the fastening elements (12) at their radially outer end are each pivotably connected to the winding carrier (6) via a joint (16, 18), wherein at least one first engagement element (18) which is designed as a joint receiver is formed on the winding carrier (6), into which engagement element the fastening element (12) engages in a latching manner for forming the joint (16, 18), so that after latching it is pivotable in the joint between an open position and a closed position.

2. A stator arrangement according to claim 1, **characterised in that** the terminal leads (10) comprise connection leads which electrically connect individual windings (8) to one another.

3. A stator arrangement according to one of the preceding claims, **characterised in that** a fastening element (12) is arranged on each of the winding carriers (6), said fastening element being engaged with this winding carrier.

4. A stator arrangement according to one of the preceding claims, **characterised in that** the fastening elements (12) and the winding carriers (6) are formed of plastic.

5. A stator arrangement according to one of the preceding claims, **characterised in that** the at least one fastening element (12) is designed in a stiff manner.

6. A stator arrangement according to one of the preceding claims, **characterised in that** the fastening elements (12) have a symmetrical shape.

7. A stator arrangement according to one of the preceding claims, **characterised in that** at least one of the winding carriers at its radially inner side comprises a second engagement element (22), with which the fastening element (12) is engaged.

8. A stator arrangement according to one of the preceding claims, **characterised in that** the fastening element (12) is releasably engaged with at least one engagement element (16, 24) on the winding carrier (6).

9. A stator arrangement according to one of the preceding claims, **characterised in that** the winding carrier (6) comprises an axial end section, with which the at least one fastening element (12) is engaged.

10. A stator arrangement according to one of the preceding claims, **characterised in that** it is part of an electric motor, in particular of an electric drive motor of a pump assembly.

## Revendications

1. Agencement de stator d'un moteur électrique ayant plusieurs supports d'enroulement (6) sur lesquels des enroulements électriques (8) sont disposés,
des câbles de raccordement électriques (10) des enroulements étant disposés à une première extrémité axiale de l'agencement de stator,
les câbles de raccordement électriques (10) étant fixés à l'aide de plusieurs éléments de fixation (12) qui sont en prise, chacun, avec un support d'enroulement (6) et
les éléments de fixation (12) s'étendant dans une direction radiale par rapport à l'axe longitudinal (X) de l'agencement de stator et s'étendant par-dessus les câbles de raccordement électriques (10) à fixer, qui sont disposés dans une direction périphérique sur une face frontale de l'agencement de stator,
**caractérisé en ce que**
les éléments de fixation (12) sont reliés, chacun, à leur extrémité radialement extérieure, de manière pivotante via une articulation (16, 18), au support d'enroulement (6), au moins un premier élément d'engagement (18) configuré comme logement d'articulation étant formé sur le support d'enroulement (6), dans lequel élément l'élément de fixation (12) s'engage par encliquetage pour former l'articulation (16, 18) de façon que, après engagement, il puisse être pivoté dans l'articulation entre une position ouverte et une position fermée.

2. Agencement de stator selon la revendication 1, **caractérisé en ce que** les câbles de raccordement (10) comprennent des câbles de liaison qui relient entre eux électriquement des enroulements (8) particuliers.

3. Agencement de stator selon une des revendications précédentes, **caractérisé en ce qu'**à chacun des supports d'enroulements (6), est fixé un élément de fixation (12) qui est en prise avec ce support d'enroulement.

4. Agencement de stator selon l'une des revendications précédentes, **caractérisé en ce que** les éléments de fixation (12) et les supports d'enroulements (6) sont réalisés en matière synthétique.

5. Agencement de stator selon l'une des revendications précédentes, **caractérisé en ce que** ledit au moins un élément de fixation (12) est rigide.

6. Agencement de stator selon une des revendications précédentes, **caractérisé en ce que** les éléments de fixation (12) présentent une forme symétrique.

7. Agencement de stator selon l'une des revendications précédentes, **caractérisé en ce qu'**au moins un des supports d'enroulement (6) comprend, à son côté interne radial, un deuxième élément de prise (22) avec lequel l'élément de fixation (12) est en prise.

8. Agencement de stator selon l'une des revendications précédentes, **caractérisé en ce que** l'élément de fixation (12) est en prise, de façon amovible, avec au moins un élément de prise (16, 24) au support d'engagement (6).

9. Agencement de stator selon l'une des revendications précédentes, **caractérisé en ce que** le support d'enroulement (6) comprend une partie d'extrémité axiale avec laquelle ledit au moins un élément de fixation (12) est en prise.

10. Agencement de stator selon l'une des revendications précédentes, **caractérisé en ce qu'**elle constitue une partie d'un moteur électrique, en particulier d'un moteur d'entrainement électrique d'un groupe motopompe.
